# EUROPEAN PATENT SPECIFICATION

(11) **EP 0 286 105 B1**
(45) Date of publication and mention of the grant of the patent: **14.12.1994**
(21) Application number: 88105572.7
(22) Date of filing: 07.04.1988
(51) Int. Cl.: G09B 29/10

(54) **Automobile driving guide apparatus**
Navigationsgerät für Fahrzeuge
Dispositif de guidage d'un véhicule

(30) Priority: 08.04.1987 JP 84756/87
(43) Date of publication of application: 12.10.1988
(73) Proprietor: HITACHI, LTD., Chiyoda-ku, Tokyo 100 (JP)
(72) Inventor: Kurihara, Nobuo, Hitachiota-shi (JP); Osuga, Minoru, Takaba Katsuta-shi (JP); Takahashi, Hideharu, Hitachi-shi (JP); Endo, Akiro, Nito-shi (JP)
(74) Representative: Baillie, Iain Cameron

(56) References cited:
- EP-A- 0 154 018
- DE-A- 3 122 901
- DE-C- 841 818
- FR-A- 2 435 768

## Description

### BACKGROUND OF THE INVENTION

The present invention relates to an automobile driver guide apparatus, and in particular to an automobile driver guide apparatus which provides a driver with various information relating to the desired target position or desired destination so that the driver may select the desired target position.

Such an automobile driver guide apparatus is proposed in JP-A-59-85599. In this apparatus, a road map is displayed on a display on the basis of the information supplied from memory means memorizing road maps, and the position of the driver's own automobile is detected and displayed on the display. In addition, road traffic information such as road congestion information and accident information is received from a road service center and additionally shown on the display.

When the driver forgets the position or name of the target position or when the place satisfying the target type or desired service such as shopping, sightseeing or game, i.e., the target position itself is not definite, the conventional automobile driver guide apparatus does not satisfactorily meet the driver's demand.

### SUMMARY OF THE INVENTION

An object of the present invention is to provide information for searching for the target position in view of the target type or for selecting an optimum target position out of several candidates for target position.

According to this invention there is provided an apparatus according to claim 1.

Therefore, in this invention, search information indicating the relationship between the target type and target position is stored in memory means to indicate candidates for the target position on the display when the driver inputs the target type and indicates a target position on the display when the driver selects and inputs the desired target position.

### BRIEF DESCRIPTION OF THE DRAWINGS

The invention will now be described by way of example with reference to the accompanying drawings in which:-
Figure 1 is a configuration diagram of an embodiment of an automobile driver guide apparatus according to the present invention,
Figure 2 is a configuration diagram of an information receiving unit which is a component of the apparatus shown in Figure 1,
Figure 3 is a software configuration diagram of a central processing unit which is a component of the apparatus shown in Figure 1,
Figure 4 is a configuration diagram of shopping information data stored in a search information memory unit,
Figure 5 shows a spot information search program,
Figure 6 shows a map display program,
Figure 7 shows an information search program, and
Figure 8 shows an example of display on a display unit.

In the Figures, like reference numerals denote like parts.

### DESCRIPTION OF THE PREFERRED EMBODIMENTS

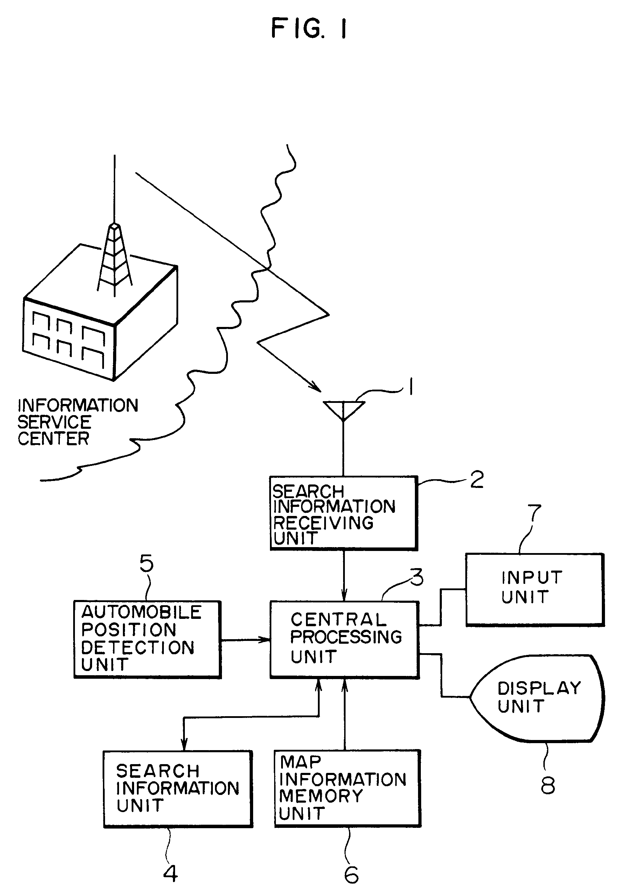

An embodiment of the present invention will now be described by referring to Figures 1 to 8. Figure 1 shows the configuration of the automobile driver guide of the present invention. As the basic configuration, the apparatus includes an automobile position detection unit 5, a search information unit 4, a map information memory unit 6, an input unit 7, a display unit 8 and a central processing unit 3. When an information service center is available, an antenna 1 and a search information receiving unit 2 are added. In the automobile position detection unit 5 of this automobile driver guide apparatus, the position of the automobile itself is regularly computed by using a direction sensor for detecting the direction of the automobile and by using a travelling distance sensor. The data of the position of the automobile itself is thus computed every moment and transmitted to the central processing unit 3. The central processing unit 3 reads out a road map including the positional data of the driver's automobile from the map information memory unit 6 and indicates the road map on the display unit 8. The position of the driver's automobile itself is also indicated by, for example, a coloured triangular symbol. The driver turns on a switch of the input unit 7 to inform the central processing unit 3 of the input start. The driver then inputs the target type by means of voice, for example. The central processing unit 3 searches for all target positions relating to the target type and their positional data in the search information memory unit 4 and clearly indicates all the target positions on the road map shown on the display unit 8 by using numerals. The driver selects one of these numerals and turns on the switch of the input unit 7 to input the numeral by for example voice. The central processing unit 3 maintains the display of the selected target position corresponding to the selected numeral and cancels display of the other candidates for target position. The central processing unit 3 searches for information relating to the particular selected target position and indicates it on the display unit 8.

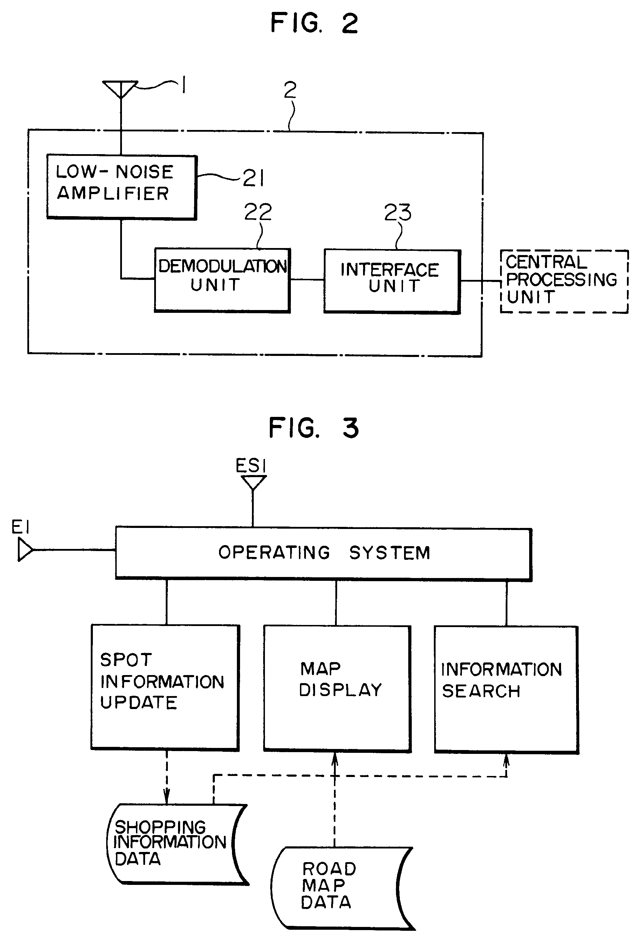

In the case where communication information from an information service center is available, a search information receiving unit 2 as shown in Figure 2 is included. Radio information received over the ether by the antenna 1 is sent to a demodulation unit 22 via a low-noise amplifier 21 and then inputted to the central processing unit 3 via an interface unit 23.

The information service center may supply daily shopping information by using radio waves. The information may also include kinds of oil and their prices at a gasoline service station, available space at a parking-place of a shop, advertisement information of a shop such as a bargain sales of clothing, foodstuffs, daily necessities, precious metals, tastes, amusement and sports goods, and features in a movie theater.

Figure 3 shows the software configuration of the central processing unit 3. In response to a power supply interrupt ESI and an external interrupt EI supplied from the switch of the input unit, the operating system starts a spot information update program, a map display program and an information search program.

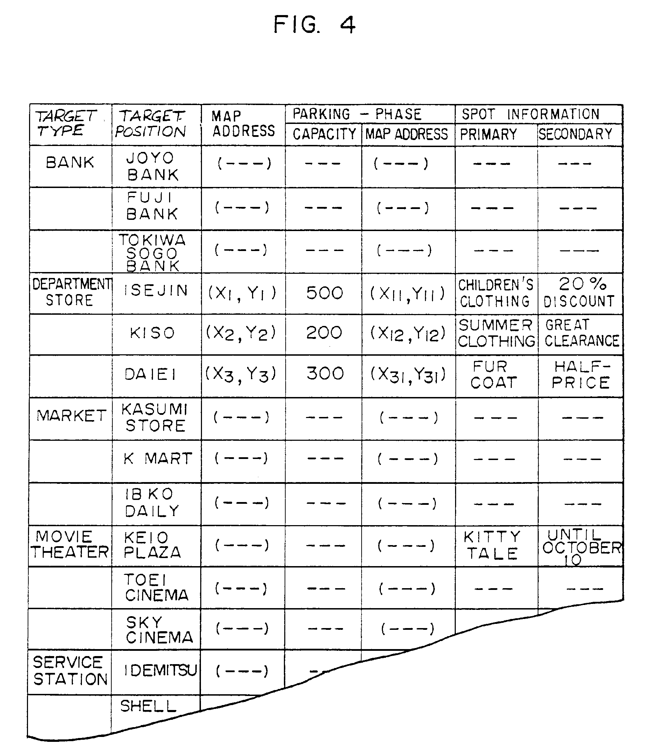

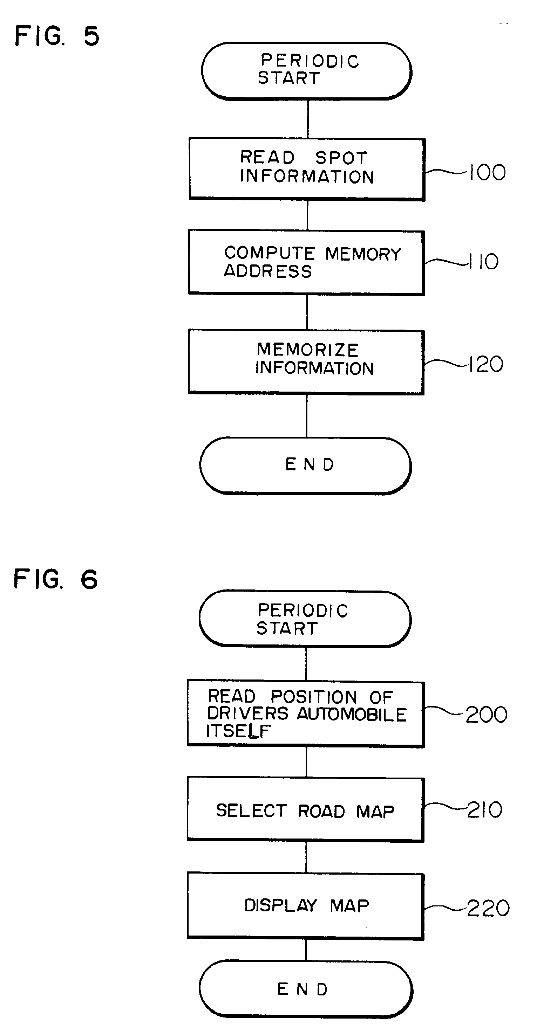

Data stored in the exemplary search information memory unit 4 of Figure 3 is shopping information data. The specific memory contents are shown in Figure 4. As examples of purposes of use, banks, department stores, markets, movie theaters, service stations, and names of goods such as cigarettes, Western food, Japanese food, haberdashery, Japanese clothes and shoes are memorized. For each of these target types, fixed information such as a target position and its related map address, and a parking-place and its map address, and bargain sales are memorized as spot information. Figure 5 shows the processing procedure of the spot information update program. The column of the spot information shown in Figure 4 is rewritten by received data. To be more specific, the spot information shown in Figure 4 is periodically read at step 100. The memory address in which the information thus read should be stored is computed at step 110. This computation may be performed by assigning a code to spot information itself to derive a memory address. When a memory address has been derived at step 120, the spot information is memorized. By periodically repeating these steps, the spot information is updated to the latest information.

The processing procedure of the program for displaying the road map is shown in Figure 6. The position of the driver's automobile is read by using the direction sensor and the travelling distance sensor at step 200. The road map around the position of the driver's automobile is read out from the road map memory unit at step 210. The road map thus read out is shown on the display.

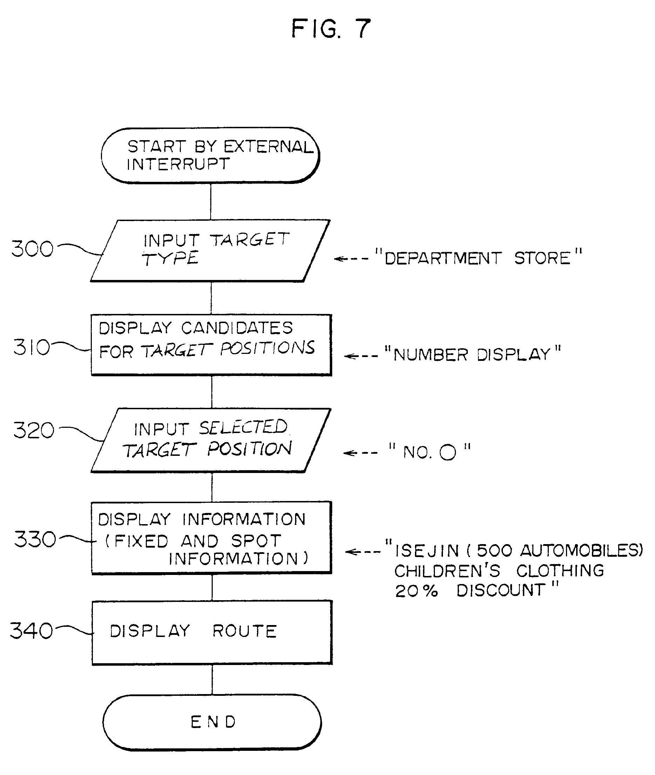

Figure 7 shows the processing procedure of the information search program, which is started by an external interrupt.

If the driver inputs a target type such as "department store" at step 300, information relating all the memorized department stores is selected out of data shown in Figure 4 and is displayed in the order of memory number at step 310.

Succeedingly at step 320, information of the desired department store is selected. A department store of the destination is inputted by its number.

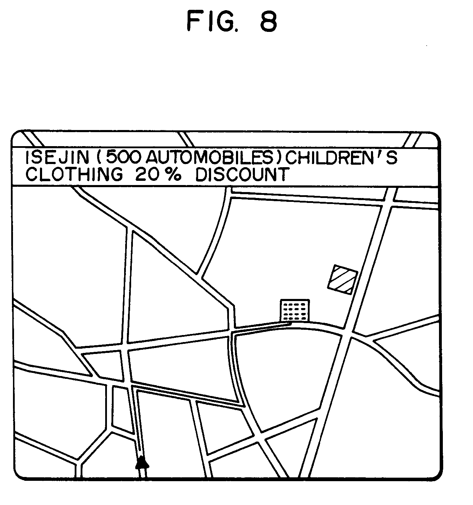

Upon selection of a department store, information such as fixed information and spot information, e.g. available parking space and bargain offers, are displayed at step 330. The route to reach the department store of the target position is coloured, and the road information as shown in Figure 8 is displayed.

When a driver goes to a town on car for shopping, the automobile driver guide apparatus of the present invention informs the driver, who is not acquainted with the town, of the target position for shopping. Further, even a driver well acquainted with the town can select an optimum place on the basis of spot information relating to the target position.

In the present invention, a target position to satisfy the target type is selected, and the path to reach the selected target position is displayed. As a result, a highly efficient and convenient automobile driver guide apparatus can be obtained.

## Claims

1. An automobile driving guide apparatus comprising:
(a) memory means (4, 6) for storing information relating to target types;
(b) target type input means (7) for allowing a driver to selectively input a particular target type and subsequently a particular target position;
(c) a central processing unit (3) adapted to be controlled by said input means (7) and to select from said memory means (4, 6) particular target types and subsequently said particular target position; and
(d) display means (8) for displaying the particular target type selected by said input means on a road map;
(e) wherein in response to selection of a particular target position by said input means (7), said central processing unit (3) controls said display means (8) to maintain the display on said road map of said selected particular target position and to cancel display of the other target positions.

2. An apparatus as claimed in claim 1 wherein means (5) are provided for determining the position of said automobile, and said central processing unit (3) is adapted to provide data representative thereof to said display means (8), whereby the location of said automobile is also displayed on said display means (8).

3. An apparatus as claimed in claim 2 wherein said display means (8) is arranged to display the route on said road map from said automobile to the selected particular target position.

4. An apparatus as claimed in any preceding claim wherein information related to said target positions is stored in said memory means (4) and means (1, 2) are provided for updating said stored information via the ether.

5. An apparatus as claimed in claim 4 wherein said information concerning said target positions is regularly updated and when said selected particular target position is displayed, information relative to said selected particular target position is also displayed on said display means (8).

## Patentansprüche

1. Navigationsgerät für Kraftfahrzeuge, mit:
(a) einer Speichereinrichtung (4, 6) zum Speichern von Informationen, die sich auf eine Zielart beziehen;
(b) einer Zielart-Eingabeeinrichtung (7), durch die es einem Fahrer möglich ist, wahlweise eine bestimmte Zielart und darauf folgend eine bestimmte Zielposition einzugeben;
(c) einer Zentraleinheit (3), die dazu geeignet ist, von der Eingabeeinrichtung (7) gesteuert zu werden und aus der Speichereinrichtung (4, 6) bestimmte Zielarten und darauf folgend bestimmte Zielpositionen auszuwählen; und
(d) einer Anzeigeeinrichtung (8) zur Anzeige der bestimmten, durch die Eingabeeinrichtung ausgewählten Zielart auf einer Straßenkarte;
(e) wobei die Zentraleinheit (3) die Anzeigeeinrichtung (8) als Reaktion auf die Auswahl einer bestimmten Zielposition durch die Eingabeeinrichtung (7) so steuert, daß die Anzeige der bestimmten ausgewählten Zielposition auf der Anzeige beibehalten und die Anzeige anderer Zielpositionen gelöscht wird.

2. Vorrichtung nach Anspruch 1, wobei Einrichtungen (5) zur Bestimmung der Position des Kraftfahrzeuges vorgesehen sind, und wobei die Zentraleinheit (3) dazu geeignet ist, diesbezügliche Daten an die Anzeigeeinrichtung (8) bereitzustellen, wodurch die Lage des Kraftfahrzeuges ebenso auf der Anzeigeeinrichtung (8) angezeigt wird.

3. Vorrichtung nach Anspruch 2, dadurch gekennzeichnet, daß die Anzeigeeinrichtung (8) so angeordnet ist, daß sie die Fahrstrecke von dem Kraftfahrzeug zu der bestimmten Zielposition auf der Straßenkarte anzeigt.

4. Vorrichtung nach einem der vorstehenden Ansprüche, dadurch gekennzeichnet, daß die Informationen bezüglich der Zielpositionen in der Speichereinrichtung (4) gespeichert sind, und wobei die Einrichtungen (1, 2) zur Aktualisierung der gespeicherten Informationen über den Äther vorgesehen sind.

5. Vorrichtung nach Anspruch 4, dadurch gekennzeichnet, daß die Informationen bezüglich der Zielpositionen regelmäßig aktualisiert werden, und wenn die ausgewählte bestimmte Zielposition angezeigt wird, werden auf der Anzeigeeinrichtung (8) auch Informationen angezeigt, die sich auf die bestimmte Zielposition beziehen.

## Revendications

1. Dispositif de guidage de conduite d'une automobile comprenant :
(a) des moyens de mémoire (4,6) pour mémoriser une information concernant des types de destinations;
(b) des moyens (7) d'entrée de types de destinations pour permettre à un conducteur d'entrer de façon sélective un type de destination particulière et ensuite une position de destination particulière;
(c) une unité centrale de traitement (3) apte à être commandée par lesdits moyens d'entrée (7) et à sélectionner, à partir desdits moyens de mémoire (4,6), des types de destinations particulières et ensuite ladite position de destination particulière; et
(d) des moyens d'affichage (8) pour afficher le type de destination particulière sélectionné par lesdits moyens d'entrée sur une carte routière;
(e) dans lequel, en réponse à la sélection d'une position de destination particulière par lesdits moyens d'entrée (7), ladite unité centrale de traitement (3) commande lesdits moyens d'affichage (8) pour maintenir l'affichage sur ladite carte routière de ladite position de destination particulière sélectionnée et annuler l'affichage des autres positions de destination.

2. Dispositif selon la revendication 1, dans lequel des moyens (5) sont prévus pour déterminer la position de ladite automobile, et ladite unité centrale de traitement (3) est adaptée pour délivrer des données représentatives de cette position auxdits moyens d'affichage (8), la position de ladite automobile étant également affichée sur lesdits moyens d'affichage (8).

3. Dispositif selon la revendication 2, dans lequel lesdits moyens d'affichage (8) sont agencés de manière à afficher l'itinéraire sur ladite carte routière, depuis ladite automobile jusqu'à la position de destination particulière sélectionnée.

4. Dispositif selon l'une quelconque des revendications précédentes, dans lequel une information associée auxdites positions de destination est mémorisée dans lesdits moyens de mémoire (4), et des moyens (1,2) sont prévus pour mettre à jour ladite information mémorisée, à travers l'éther.

5. Dispositif selon la revendication 4, dans lequel ladite information concernant lesdites positions de destination est mise à jour régulièrement et, lorsque ladite position de destination particulière sélectionnée est affichée, une information relative à ladite position de destination particulière sélectionnée est également affichée sur lesdits moyens d'affichage (8).
